Europäisches Patentamt

European Patent Office

Office européen des brevets

(19)

(11) Numéro de publication : **0 165 873 B1**

# FASCICULE DE BREVET EUROPÉEN

(12)

(45) Date de publication du fascicule du brevet :
04.05.88

(51) Int. Cl.⁴ : **B 21 K   1/56, F 16 B 37/12**

(21) Numéro de dépôt : **85401197.0**

(22) Date de dépôt : **17.06.85**

(54) **Procédé de fabrication d'un insert fileté.**

(30) Priorité : **20.06.84 FR 8409684**

(43) Date de publication de la demande :
**27.12.85 Bulletin 85/52**

(45) Mention de la délivrance du brevet :
**04.05.88 Bulletin 88/18**

(84) Etats contractants désignés :
**BE DE GB IT NL SE**

(56) Documents cités :
**FR-A- 1 167 418**
**FR-A- 1 187 602**
**FR-A- 1 308 201**
**GB-A- 1 101 669**
**US-A- 3 163 872**
**US-A- 3 220 029**
**US-A- 3 391 721**

(73) Titulaire : **SIMMONDS S.A.**
**5 rue Michelet**
**F-92152 Suresnes Cédex (FR)**

(72) Inventeur : **Baglin, Michel**
**7 rue Anatole France**
**F-72600 Mamers (FR)**

(74) Mandataire : **Durand, Yves Armand Louis et al**
**Cabinet Z. Weinstein 20, Avenue de Friedland**
**F-75008 Paris (FR)**

## Description

La présente invention a pour objet un procédé de fabrication d'un insert fileté extérieurement et intérieurement.

On sait que, pour réaliser des assemblages vissés il convient souvent d'usiner un certain nombre de trous taraudés dans une pièce massive, ce après quoi un élément quelconque peut être fixé sur cette pièce par vissage. Cependant, dans de tels assemblages, la résistance du taraudage après vissage peut s'avérer trop faible vis-à-vis de l'effort de traction des vis. Dès lors, les filetages coopérants du trou taraudé et de la vis peuvent se détériorer. Il en est de même dans le cas de démontages fréquents des pièces assemblées car, comme on le comprend, les filetages s'usent et par conséquent se détériorent à la longue. En outre, il est extrêmement difficile, sinon impossible, notamment pour les pièces utilisées dans l'industrie aéronautique, de conférer au trou taraudé des possibilités de freinage de la vis pour que celle-ci soit auto-freinée lors du vissage.

Aussi, pour remédier à ces inconvénients, on a déjà proposé de réaliser des assemblages vissés par l'intermédiaire d'inserts qui présentent la forme de petits tubes cylindriques filetés extérieurement et intérieurement.

Plus précisément, l'insert est vissé dans le trou taraudé pratiqué dans la pièce massive, puis serti dans ce trou par sa partie supérieure, ce après quoi on peut visser dans l'insert une vis afin de fixer un élément quelconque sur la pièce.

L'insert étant réalisé en un matériau dur et son filetage extérieur étant ancré dans le trou taraudé, on comprend donc que les inconvénients ci-dessus résultant de l'utilisation d'un simple trou taraudé sont supprimés.

Toutefois, des problèmes se posent si l'on veut munir ces inserts de moyens permettant l'auto-freinage de la vis. Dans ce but, on peut par exemple déformer ou ovaliser préalablement l'insert avant son introduction dans le trou taraudé, mais cette déformation disparaît sous l'effet de l'introduction et du vissage de l'insert dans le trou taraudé qui est parfaitement circulaire, de sorte que l'effet d'auto-freinage recherché est annulé. Etant donné que, dans l'industrie aéronautique notamment, il est absolument indispensable que l'insert possède des propriétés d'auto-freinage, il convient par conséquent d'extraire du trou taraudé l'insert qui ne présente pas les qualités d'auto-freinage requises, par découpage de sa partie sertie à l'aide d'une petite fraise par exemple, et cela jusqu'à ce que le trou taraudé soit muni d'un insert qui comporte réellement des qualités d'auto-freinage suffisant et efficace lors du vissage de la vis.

On comprend donc que les opérations d'échange ou de remplacement successifs des inserts jusqu'à obtenir un insert qui une fois en place présente les propriétés requises d'auto-freinage sont extrêmement délicates, longues et coûteuses, sans parler du risque de détérioration du filetage du trou taraudé lors du découpage de la partie sertie de l'insert et lors de son extraction.

On connaît, d'après le document FR-A-1 308 201, des inserts présentant la forme générale d'un tube cylindrique possédant un filetage extérieur et intérieur comportant des déformations dirigées vers l'axe dudit tube, mais ce document ne décrit aucun moyen de fabrication de l'insert et qui soit susceptible de garantir que les déformations s'inscrivent à l'intérieur de la forme cylindrique du tube et puissent assurer correctement leur fonction d'auto-freinage après vissage de l'insert dans un trou taraudé.

Par ailleurs, le document US-A-3 220 029 décrit également des inserts du type ci-dessus et dont le filetage comporte des empreintes dirigées vers l'axe de l'insert et obtenues à l'aide de marteaux. Mais lors de la réalisation des empreintes, l'insert est simplement supporté par l'un des marteaux et éventuellement maintenu par des doigts, de sorte qu'encore une fois, il ne peut pas être garanti que les empreintes s'inscrivent à l'intérieur de la forme cylindrique de l'insert.

Aussi la présente invention a pour but de remédier à ces inconvénients en proposant un procédé de fabrication d'un insert qui conserve toujours sa déformation permettant l'auto-freinage de la vis et est insensible à l'opération d'introduction ou de vissage dans le trou taraudé qui le reçoit par le fait que le filetage extérieur de l'insert est réalisé dans un trou taraudé qui maintient la surface périphérique entière de l'insert pendant la réalisation des empreintes.

A cet effet, l'invention a pour objet un procédé de fabrication d'un insert présentant la forme générale d'un tube fileté intérieurement et extérieurement, selon lequel, pour réaliser le filetage extérieur de l'insert tout en conférant à cet insert des possibilités de freinage, on effectue d'abord un trou taraudé dans une pièce comportant au moins un marteau analogue susceptible de faire saillie dans ledit trou par sa face active qui subit le taraudage en même temps que l'ensemble du trou, on visse dans ce trou l'insert pour former sur sa périphérie externe un filetage mâle correspondant au filetage femelle défini par le trou et la face active du marteau, on exerce une pression sur le marteau vers l'axe du trou et de l'insert pour créer localement sur la paroi de cet insert au moins une empreinte faisant saillie vers l'intérieur de celui-ci sans altérer la forme cylindrique restante de l'insert, puis, après rétractation du marteau, on retire par dévissage l'insert du trou taraudé.

On comprend donc que les empreintes de l'insert permettrons un auto-freinage de la vis et qu'elles ne seront pas annulées sous l'effet du vissage de l'insert dans le trou taraudé, puisque toute la partie extérieurement filetée de l'insert, en dehors des empreintes précitées, demeure parfaitement cylindrique et pourra donc être vissée dans le trou taraudé sans provoquer un effort de déformation quelconque sur la paroi de l'insert et qui serait susceptible de faire disparaître les empreintes.

Mais d'autres avantages et caractéristiques de l'invention apparaîtront mieux dans la description détaillée qui suit et se réfère aux dessins annexés, donnés uniquement à titre d'exemple, et dans lesquels :

- la figure 1 illustre en élévation un insert représenté suivant deux demi-vues respectivement extérieure et en coupe axiale ;

- la figure 2 est une section suivant la ligne II-II de la figure 1 ;

- la figure 3 est une vue en coupe suivant la ligne III-III de la figure 1 ;

- la figure 4 est une vue schématique partielle et en coupe verticale d'un outil pour fabriquer l'insert, et

- la figure 5 illustre à grande échelle et en élévation l'insert en position montée dans le trou taraudé d'une pièce, ledit insert étant représenté suivant deux demi-vues comme sur la figure 1.

En se reportant aux dessins annexés, on voit un insert qui se présente sous la forme générale d'un tube cylindrique comportant un filetage extérieur 2 et un filetage intérieur 3 s'étendant tous les deux sur seulement une partie de la hauteur du tube.

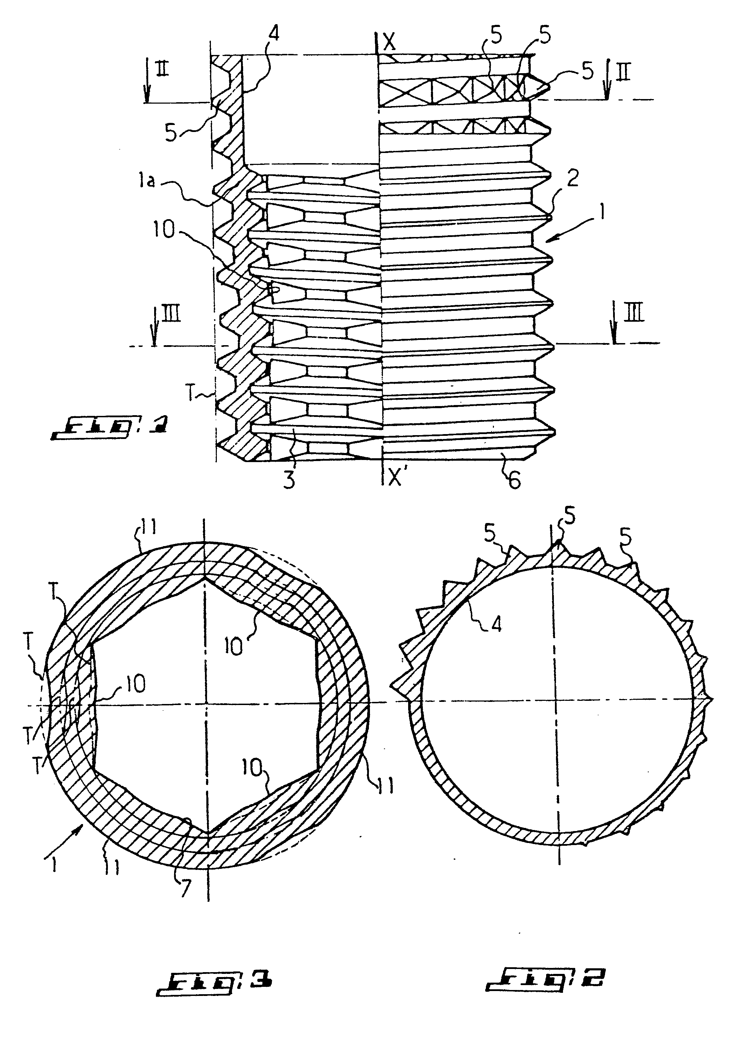

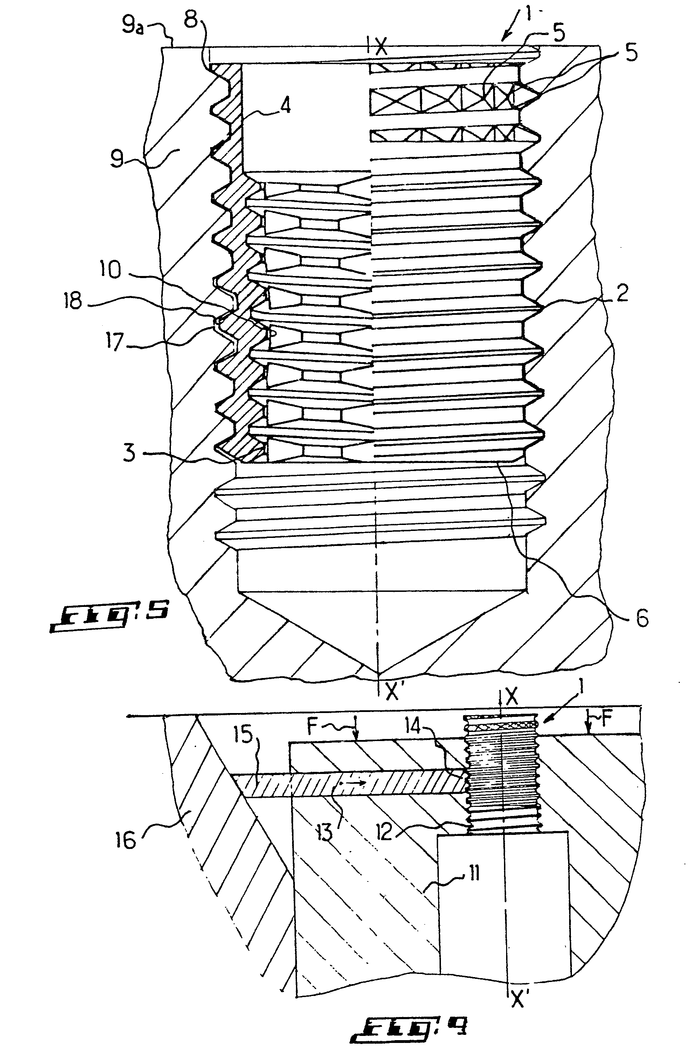

Plus précisément, la partie supérieure de l'insert ou tube cylindrique 1 comporte un chambrage intérieur lisse 4 et comporte sur l'extérieur un moletage constitué par une ou plusieurs rangées de dents ou analogues 5 dont le rôle sera expliqué ultérieurement. Le filetage intérieur 3 qui s'étend depuis le moletage jusqu'à la base 6 de l'insert tubulaire 1 présente en section transversale une forme non cylindrique, par exemple une forme hexagonale, comme on l'a montré en 7 sur la figure 3. Ainsi, une clé mâle hexagonale, du type allen par exemple, pourra, après introduction dans l'insert 1, venir en prise avec le profil intérieur hexagonal de l'insert de façon à permettre son vissage par son filetage extérieur 2 dans l'orifice taraudé 8 pratiqué dans une pièce 9, comme on le décrira plus loin.

La paroi tubulaire 1a de l'insert 1 comporte une ou plusieurs déformations empreintes ou analogues 10 dirigées vers l'axe X-X' du tube 1 et s'inscrivant à l'intérieur de la forme cylindrique restante du tube. Autrement dit, le filetage extérieur 2 demeure parfaitement circulaire en dehors des empreintes 10, comme on l'a montré en 11 sur la figure 3.

Suivant une réalisation préférée, et comme on le voit encore sur la figure 3, on prévoit trois empreintes telles que 10 espacées suivant un angle sensiblement égal à 120°.

Pour mieux montrer les empreintes 10, ainsi que la forme parfaitement cylindrique du filetage extérieur 2 en dehors de ces empreintes, on a porté sur les figures 1 à 3 des traits pointillés T qui matérialisent la forme de l'insert 1 avant déformation.

Les trois empreintes 10 permettent un autofreinage de la vis (non représentée) introduite dans l'insert 1, comme on l'expliquera en détail plus loin.

On décrira maintenant l'outil permettant de fabriquer l'insert représenté sur les figures 1 à 3, en se reportant à la figure 4.

Cet outil, qui est représenté d'une manière très schématique, comprend essentiellement une pièce 11 dans laquelle est ménagée un trou taraudé 12. Un ou plusieurs marteaux ou analogues, tels que 13, sont montés coulissant dans la pièce 11 suivant une direction sensiblement perpendiculaire à l'axe du trou taraudé X-X'.

Ces marteaux 13 sont susceptibles de faire saillie dans le trou taraudé 12 par leur face active 14. Il est essentiel ici de remarquer que l'extrémité ou face active 14 des marteaux 13 possède un filetage en continuité avec le filetage du trou taraudé, car, suivant une caractéristique essentielle, on effectue le taraudage du trou 12 en même temps que celui de face active 14 en affleurement avec la paroi dudit trou.

L'extrémité 15 des marteaux 13 est actionnable par un élément conique 16 monté autour de la pièce 11.

La fabrication de l'insert 1 s'effectue de la manière suivante.

Après avoir préalablement effectué dans la pièce 11 le taraudage du trou 12 en même temps que celui de la face active 14 des marteaux 13, on visse dans le trou l'insert 1 comme cela est visible sur la figure 4, de sorte qu'on réalise sur la périphérie externe de cet insert le filetage extérieur mâle 2. Puis on exerce une pression, à l'aide d'une presse par exemple, sur la pièce 11, et cela suivant les flèches F visibles sur la figure 4. Ainsi la pièce 11 descend de sorte que les marteaux 13 portant par leur extrémité 15 sur l'élément conique 16, sont actionnés vers l'axe X-X' du trou taraudé 12 et de l'insert 1 pour créer sur la paroi de cet insert les empreintes 10 sans altérer la forme cylindrique restante de cet insert. Puis, après soulèvement de la pièce 11, on rétracte les marteaux 13, et on retire par dévissage l'insert 1 du trou taraudé 12, ledit insert étant ainsi prêt à l'utilisation, comme on va le décrire.

On notera cependant ici que, suivant une réalisation préférée de l'outil, la pièce 11 comportera trois marteaux 13 espacés les uns des autres suivant un angle sensiblement égal à 120°, de façon à réaliser trois empreintes 10, comme cela est bien visible sur la figure 3. Le nombre de marteaux 13 est bien sûr fonction du nombre d'empreintes 10 que l'on veut réaliser, étant bien entendu que ces empreintes pourraient être réalisées dans un ou plusieurs plans.

On se reportera maintenant à la figure 5 qui illustre l'utilisation de l'insert décrit. L'insert 1 est introduit par vissage dans l'orifice taraudé 17 de la pièce 9 sur la surface supérieure 9a de laquelle on désire fixer un élément quelconque.

Il est essentiel de remarquer ici que le vissage de l'insert 1 s'effectuera sans aucune difficulté et sans aucun risque de déformation et d'annulation des empreintes 10, puisque comme expliqué précédemment, le filetage extérieur 2 dudit insert est parfaitement cylindrique en dehors des empreintes 10. Ces empreintes 10 qui en réalité forment des bossages très petits dirigés vers l'axe X-X' de l'insert 1 sont bien visibles sur la figure 5 par le fait qu'un espace 18 est laissé entre le filetage extérieur mâle 2 et le filetage femelle du trou 17 taraudé dans la pièce 9.

On insistera encore ici sur le fait que les empreintes 10 ne peuvent pas être altérées par une réaction de vissage quelconque de l'insert 1 dans l'orifice taraudé 17. Après le vissage de l'insert 1, comme montré sur la figure 5, on épanouit radialement vers l'extérieur la partie supérieure de l'insert 1 à l'aide d'un outil approprié pénétrant dans le chambrage intérieur 4. Ainsi, le moletage ou les dents 5 s'accrochent dans la paroi taraudée du trou 17 de la pièce 9, de sorte que l'insert 1 est serti et immobilisé dans ce trou. Il suffit alors de placer sur la pièce 9 l'élément que l'on veut y fixer à l'aide d'une vis introduite dans l'insert 1. Et comme on le comprend, cette vis sera auto-freinée dans l'insert en raison de la présence des empreintes 10 resserrant le filetage intérieur 3 de l'insert. L'assemblage ainsi réalisé sera par conséquent parfait, ce qui est essentiel dans de nombreuses applications, et tout particulièrement dans l'industrie aéronautique.

On a donc réalisé un insert muni de moyens d'auto-freinage qui ne risquent aucunement d'être altérés ou annulés lors de son introduction par vissage dans une pièce.

Bien entendu, l'invention n'est nullement limitée au mode de réalisation décrit et illustré qui n'a été donné qu'à titre d'exemple.

## Revendication

Procédé de fabrication d'un insert présentant la forme générale d'un tube fileté intérieurement et extérieurement, selon lequel, pour réaliser le filetage extérieur de l'insert tout en conférant à cet insert des possibilités de freinage, on effectue d'abord un trou taraudé (12) dans une pièce (11) comportant au moins un marteau ou analogue (13) susceptible de faire saillie dans ledit trou par sa face active (14) qui subit le taraudage en même temps que l'ensemble du trou, on visse dans ce trou l'insert (1) pour former sur sa périphérie externe un filetage mâle correspondant au filetage femelle défini par le trou et la face active (14) du marteau, on exerce une pression sur le marteau vers l'axe du trou et de l'insert pour créer localement sur la paroi de l'insert au moins une empreinte (10) faisant saillie vers l'intérieur de cet insert sans altérer la forme cylindrique restante de l'insert, puis, après rétractation du marteau, on retire par dévissage l'insert (1) du trou taraudé (12).

## Claim

Method of making an insert presenting the general form of an inwardly and outwardly threaded tube, according to which, to carry out the outer threading of the insert while conferring to this insert braking possibilities, a threaded hole (12) is first formed in a part (11) including at least a hammer body or the like (13) likely to protrude into the said hole with its active face (14) which undergoes the threading at the same time as the whole hole, the insert (1) is screwed into this hole to form on the outer periphery thereof an outer threading corresponding to the inner threading defined by the hole and the active face (14) of the hammer body, a pressure is exerted on the hammer body towards the axis of the hole and of the insert to locally create on the wall of the insert at least a print (10) protruding towards the interior of this insert without altering the remaining cylindrical shape of the insert, then, after retractation of the hammer body, the insert (1) is taken out of the threaded hole (12) through unscrewing.

## Patentanspruch

Verfahren zur Herstellung eines Einsatzes, der die allgemeine Form eines Rohres, das innen und außen mit einem Gewinde versehen ist, aufweist, gemäß dem, um das Außengewinde des Einsatzes zu bilden und gleichzeitig um diesem Einsatz Bremsmöglichkeiten zu verleihen, man zunächst ein Gewindeloch (12) in einem Teil (11) realisiert, das wenigstens einen Hammer oder dergleichen (13) aufweist, der fähig ist, in das besagte Loch mit seiner, mit dem gesamten Loch gleichzeitig mit Gewinde versehenen aktiven Fläche (14) vorzuspringen, man den Einsatz (1) in dieses Loch schraubt, um auf dessen Außenumfang ein Außengewinde zu bilden, das dem, durch das Loch und die aktive Fläche (14) des Hammers bestimmten Innengewinde entspricht, man einen Druck auf den Hammer in Richtung auf die Achse des Loches und des Einsatzes ausübt, um örtlich auf die Wand des Einsatzes wenigstens eine, in Richtung auf das Innere dieses Einsatzes vorspringende Eindrückung (10) zu bilden, ohne die verbleibende zylindrische Form des Einsatzes zu verändern, und dann, nachdem der Hammer zurückgezogen worden ist, man den Einsatz (1) aus dem Gewindeloch (12) durch Abschrauben entfernt.

Fig. 1

Fig. 3

Fig. 2

FIG.5

FIG.4